# EUROPEAN PATENT SPECIFICATION

(11) **EP 1 517 797 B1**
(45) Date of publication and mention of the grant of the patent: **11.04.2007**
(21) Application number: 03727638.3
(22) Date of filing: 06.05.2003
(51) Int. Cl.: B41M 1/18, B41M 3/14

(54) **IMPROVEMENTS IN PRINTING PROCESSES USING METALLIC INKS**
VERBESSERUNGEN VON DRUCKVERFAHREN, DIE METALLISCHE FARBEN BENUTZEN
AMELIORATIONS ASSOCIEES A DES PROCEDES D'IMPRESSION AU MOYEN D'ENCRES METALLIQUES

(30) Priority: 07.05.2002 GB 0210367; 17.08.2002 GB 0219232
(43) Date of publication of application: 30.03.2005
(73) Proprietor: Metalfx Technology Limited, Guiseley, Leeds LS20 8BX (GB)
(72) Inventor: Ainge, Andrew, Guiseley, Leeds LS20 8BX (GB)
(74) Representative: Tomkinson, Alexandra
(86) International application number: PCT/GB2003/001897
(87) International publication number: WO 2003/095217

(56) References cited:
- EP-A- 0 763 926
- US-A- 5 370 976
- US-A- 5 629 068

## Description

This invention is concerned with improvements in metallic printing processes, and more specifically with a metallic printing process which results in metallic colours being immediately apparent in a final printed substrate after only a single pass through a traditional colour press.

It will be appreciated from the following that this invention is primarily concerned with the printing of metallic colours using conventional lithography techniques, but those skilled in the art will understand that the particular printing technique may not be essential to the invention. Indeed, the applicant considers that the improved printing process described may be applicable to other printing methods, such as gravure or silk screen printing methods, or indeed any printing method where the final image to be printed includes at least one area which is of a metallic nature.

While a complete explanation of standard and conventional lithography techniques is considered to be beyond the scope of this document, a brief description will assist the reader in understanding the invention.

Lithographic printing may be effected by one of two methods. In the first method, a mask of the entire artwork to be printed by a single plate roller is produced, and developed photographically onto a lithographic plate subsequently mounted on the plate roller. Thus, an entire image is transferred to the paper by a rubber blanket roller which is in contact with both the paper (albeit intermittently) and the plate roller, whether in a single colour or with a colour vignette. This method is currently extensively used in the security printing of documents.

The second method is applicable to the construction of a lithographic printing plate from computer originated artwork, and involves the generation of so-called "bit-map" images from the computer artwork. The computer generated image is processed line by line (the thickness of the lines depending on the desired resultant screen resolution of the lithographic plate) by a Raster Image Processor (RIP) which sends the bit-map information to an image setter. From the original computer image, four bit-mapped masks comprising a great many dots will typically be produced from the image setter, one relating to each of the colours Cyan (C), Yellow (Y), and Magenta (M), these colours being inverse to the logical primary colours Red, Green, and Blue, and from which any desired colour may be produced by mixing different quantities of each, and one for black (K). The objective in printing images lithographically is to produce yellow, magenta, and cyan printing plates that are negative records of the amounts of blue, green, and red in the original image. Black is added to adjust the contrast of the resulting printed image in desired areas.

Accordingly, these four bit-mapped masks are used in the creation of lithographic plates mounted on the plate rollers. However, in this method, only one colour is applied to each plate roller, the printing press having at least four consecutively arranged press units each containing a plate roller through which the paper passes. Thus, for example, a first plate roller will transfer a cyan dot pattern to the paper, a second plate roller will apply a different dot pattern in magenta to the paper, and a third plate roller will transfer a further different dot pattern in yellow, the different dot patterns applied to the paper in precise register with one another such that a completed image identical to that of the computer originated image results. (A fourth plate roller applies a black pattern or image to the paper as desired).

The different colours used in the computer generated image are reproduced on the paper as a result of the marginal overlap or exceedingly close juxtaposition of dots of different inks which causes the colours of said dots to blend together and so create the desired colour. Obviously, where any of the colours cyan, magenta, or yellow are explicitly required in the image, dots of different colours will not overlap.

In most lithographic processes, the interaction of screen angle, colour and dot size affect the quality of the reproduction, and in general, certain screen angles (the angle at which the rulings of a halftone screen (99% or less printing of the screen) are set when making screened images) have been established, namely 45° for Magenta, 75° for Cyan, 90° for Yellow and 105° for Black.

Although the above lithographic method is very flexible for the production of colour images, the number of colours being limited only by the currently available technology, it has in the past been difficult to print a substrate with certain regions which are required to have a metallic colour, for example requiring a silver or gold colour.

Printing metallic colours poses the problem that either one or two additional passes through the machine are required if gold or silver metallic inks are to be applied to the substrate, thus either necessitating a 5 or 6 colour press as opposed to the conventional 4 colour press. Of course, it is always possible to use a particular metallic colour in a printing press if only a single metallic colour is required on the substrate, but the reader will immediately understand the wholly inadequate method of printing whereby a substrate is required to be passed through a press each time a different colour is required to be printed on the substrate. For example, a car manufacturer wishing to print a brochure having a single page on which all the metallic colours swatches of a model of car are offered would generally be required to print using pre-mixed separate metallic inks from the Pantone metallic colour reference for each swatch. The brochure would then be required to pass through the printing press a number of times corresponding to the number of metallic colour swatches being provided on the page. This is time consuming and costly.

A further problem with conventional metallic printing methods is that whilst a metallic colour can be produced on a substrate, there is no control over the exact appearance of the metallic colour and there is no reference that can be used to allow printers from different areas of the world to produce the same metallic colour. As such, metallic colours in brochures relating to the same product can vary from printer to printer, which is undesirable.

The pantone metallic colour reference scheme provides pre-defined formulae for producing a great number of pre-defined colours, which also includes non-metallic colours. However, the problem with this reference scheme is that each metallic colour requires mixing of a number of other paints or inks together in pre-defined quantities. As such, a user can simply not produce a proof copy of a brochure or other printed matter which is to contain a metallic colour since the inks would each need to be made up first, which is also both time consuming and costly.

It is for the reasons mentioned above that CMYK (cyan, magenta, yellow, black) lithography is currently so widespread because it presents no difficulty to the user in printing an image having a potentially infinite number of colours using only the primary colours of CMYK compared to that of metallic colour printing.

A known Metallic Integrated Printing Process (MIPP) developed by Eckart-Werke Metal Pigments and Powders of Furth, Bayern, Germany, requires a subjective assessment of the original photographic image to be made to determine which areas of said image are required to be printed with a metallic colour and whether the printing run should be conducted using a gold or silver ink. If a silver ink is chosen then this would replace either the cyan or black image separation in the printing press, whereas if a gold ink is selected, then a gold separation would traditionally replace the yellow separation in the printing press. A softening of the edges of the colour separations/masks may be effected to reduce any sharp cut-out effects which may arise in the final printed image.

However, a problem with the MIPP method is that one of the conventional screen angles must be freed for each of the metallic inks used in order to prevent problems of screen clash and moiré effects which may arise if two different screens having the same screen angle are applied to the substrate. In addition, the subjective assessment still allows for variation between metallic colours provided by different printers in the world. Furthermore, the MIPP method only works with one industry standard application programme, namely Adobe Photoshop, for the creation and editing of digital photographs and is incompatible with any other programme. As such, the MIPP method is of only limited use.

US5370976 (Williamson et al) describes a process which may be used to lithographically print colour images in which certain portions of the image require metallic colours and others require flat colours. This US Patent offers an alternative printing technique whereby an amount of gold or silver metallic ink is applied in a dot pattern to the substrate in a similar fashion to the other halftone screens at the end of the printing press process. The invention provides a 5/6-colour process, namely CMYK press units, with the addition of silver and/or gold press units such that the replacement of one of the conventional colours CMYK is not required as is the case with MIPP. However, in this process the gold and silver screen angles are the same as those for cyan and magenta respectively, and it is therefore still possible to obtain screen clash and moiré effects which are undesirable. This technique has also only been applied to the scanning of photographic imagery to create a "yellow mask" and does not work in any other applications, thereby also being of only limited use.

Furthermore, there remains in the process described in the patent an element of subjectivity in that a skilled operator is still required to make an assessment of the image separations. Specifically, the original four colour separations obtained from an electronically scanned copy of the original image are edited in that a "yellow mask" is created by reviewing an electronic version of the image, the amount of contrast between heavy and light metallic regions on the image is determined (this step is completed by a person having relevant skill and experience in this art), and subsequently the contrast information is forwarded to the scanner to create the yellow mask which isolates areas where a metallic effect is desired.

This method not only involves a certain element of subjectivity (which therefore introduces the possibility that no two printed images will ever be the same), and furthermore while the resulting printed image certainly includes clearly defined metallic images, there is a certain cleanness and sharpness to the images which can be visually offensive and unrealistic.

It is therefore an object of the present invention to provide a printing process whereby a plurality of metallic colours present in an original image can be realistically reproduced using a conventional colour press, such as a 5/6 colour press, and which precludes screen clash and moiré effects which are commonly a pervasive problem in the methods of the prior art.

It is a further object of the present invention to provide a printing process wherein an image comprising a number of different metallic colours can be faithfully and repeatably reproduced without the requirement for skilled appraisal and adjustment of any of the intermediate (CMYK) separations which are required for the conventional printing process.

According to a first aspect of the present invention there is provided a printing process for printing an image having one or more metallic regions, said process including the steps of applying a pre-determined pattern of dots of a first ink colour onto a substrate, optionally followed by applying pre-determined patterns of dots of one or more further ink colours onto the substrate, the combination of dot patterns of said first and/or further ink colours resulting in at least part of the image and wherein a base layer containing a metallic ink is first provided on the substrate in a pre-determined pattern prior to the first and/or further ink colours being applied thereto to form the image, characterised in that each of the base layer and the first and/or further ink colours are printed at different screen angles.

The printing process of the present invention allows millions of different metallic colours to be produced which can be printed onto the substrate following a single pass through a printing press, such as a five colour printing press, thereby saving time and money. The resulting metallic region(s) are also cleaner and provide a more realistic metallic effect.

Preferably the track levels of the base layer metallic ink and/or the first and/or further ink colours are adjusted to allow adherence of the first and/or further colours onto the metallic ink base layer. Typically, the tack level of the metallic ink is reduced and the tack level of the first and/or further ink colours are increased from conventional levels. The reduction in the difference between tack levels of the different inks allows improved adherence of the different ink layers onto each other and the substrate. As such, the metallic ink can be included in a base layer rather than an upper layer as has previously been the case due to the lack of adherence of the metallic ink layers with lower ink layers.

Most preferably, the inks used in the printing process according to the invention have tack levels which are matched to one another, and most preferably the tack rating of all the inks in the various separations printed during the process are substantially similar or the same. Indeed, it is most preferable that the tack rating of the inks used in the process is approximately 5.

Preferably the first and/or further ink colours are substantially transparent, thereby allowing the metallic ink in the base layer to be visible therethrough. With the application of the first and/or further ink colours over the base metallic ink layer, the former inks act to seal the base layer, thereby preventing metallic particles from being rubbed off and/or smudging, as is currently the case with prior art metallic prints which are applied over the first and/or further inks.

In one embodiment the first and/or further ink colours are one or more of conventional standard colour printing inks of cyan, magenta, yellow and/or black (CMYK).

In a further embodiment the first and/or further ink colours are one or more altered standard colour printing inks based on CMYK, such as fluorescent cyan, fluorescent magenta and/or the like.

Preferably the printing press used in the printing process includes a printing unit for printing the metallic ink base layer onto the substrate and at least four further successive printing units for printing the CMYK standard or CMYK altered colours onto the substrate, these further printing units typically located downstream of the metallic ink printing unit.

One or more further printing units can be provided in the printing press for providing a sealer layer or other required layer on the substrate. The sealer layer typically acts to protect the printed ink matter printed on the substrate.

Preferably the base layer containing the metallic ink is printed in a block arrangement or as an area of solid colour in a pre-determined pattern (i.e., as opposed to providing the metallic ink as a so called spot colour, wherein a plurality of spot colours produce a dot pattern). However, the base layer can be provided in a dot pattern arrangement if required. This latter arrangement allows the formation of a gradation of silver to be provided, thereby allowing a more realistic photographic image to be formed and retaining highlighted areas (white pixel areas) where little or no silver would appear.

Preferably the metallic base layer can be a silver metallic ink and/or a gold metallic ink. In a preferred embodiment only a silver metallic ink is used since a full set of metallic colours can be produced using silver, including the production of an array of gold metallic colours.

The percentages of the metallic ink and first and/or further inks applied to the substrate can be varied to obtain the different colours in the resulting image. The percentage of each component ink colour can be varied by pre-determined increments to produce the millions of different metallic colours associated with the present invention. As such, the present invention allows the production of a set of palette of metallic colours to be produced, which can be reliably reproduced anywhere in the world, thereby allowing customers to guarantee that printing products produced by different printers will be substantially identical. Each colour of the palette is given a unique reference code which is universally recognised.

The percentage of the inks, including the metallic ink, can vary from 0-100%. Further preferably the metallic ink is varied from 60-100%.

The provision of the base layer and the first and/or further colours being printed at different screen angles precludes the occurrence of moiré effects and possible screen clash without needing to remove or otherwise adjust the process colour separations, as is done in the abovementioned US Patent.

The use of conventional screening techniques, such as AM Screening, can be employed, wherein the base layer metallic ink or the first and/or further colours are printed at screen angles shifted from conventional screen angles.

The conventional screen angles can be rotationally shifted by ±7.5°.

Most preferably the conventional process colour screens of CMYK or the adjusted CMYK colour screens are printed using shifted screen angles, wherein the conventional screen angles for these colours are rotationally shifted by ±7.5°. For example, conventional screen angles are typically:

| | |
|---|---|
| Cyan: | 15° or 105° |
| Magenta: | 75° |
| Yellow: | 0° or 90° |
| Black: | 45°, |

And the shifted screen angles are typically:

| | |
|---|---|
| Cyan: | 112.5° |
| Magenta: | 67.5° |
| Yellow: | 97.5° |
| Black: | -37.5°. |

The metallic base layer ink typically has a screen angle which is one of the conventional screen angles of 0°, 15°, 45°, 75°, 90°, and 105°, or other angle divisible by 15 and which has been found by the applicant to eliminate moiré patterns in print.

Most preferably, the metallic ink base layer is printed at a screen angle of 45°. However, it has been found by the applicant that it is preferable to print the metallic base layer on the colour separation that has the lowest colour value and pixel area.

In an alternate embodiment of the invention, the metallic ink base layer can have a screen angle which is chosen to be set at one of the shifted screen angles which deviate from the conventional screen angles by ±7.5°, the first and/or further ink colours being applied to the substrate at the conventional screen angles.

Depending on particular image considerations, it is possible to switch the black and the magenta shifted screen angles around to provide a better print result, depending on the subject matter of the image, e.g. an image having a predomination of black areas would be better printed with the black separation having a screen angle of -37.5°, whereas an image in which flesh tones predominate would be better printed with the magenta separation at a screen angle of -37.5°.

It is further preferable that the one or more inks used in the process possess high lustre so that the resulting image also possesses high lustre. The lustre is substantially uniform, thereby providing the image with an aesthetically appealing sheen or gloss, which also contributes to the quality of the printed image, in particular the metallic regions of that image.

In one embodiment of the present invention, it is also possible to use achromatic techniques to remove unwanted black tonal areas from within the range (UCR-Under Cover Removal) to free the black angle, as black can be achieved through a mixture of Cyan, Magenta and Yellow.

In a further aspect of the present invention, a security feature may be printed onto a substrate by printing within a metallic region of an image with a textual or other informative pattern with a different pre-determined amount or pattern of metallic ink to that of the surrounding metallic area, i.e. 70% Silver surrounded by 100% silver, so that the informative pattern can be seen to appear and disappear under the correct conditions of light.

In yet a further aspect of the present invention, a security feature may be printed onto a substrate by printing within a metallic region of an image with a textual or other informative pattern using the first and/or further ink colours, such as for example, printing said first and/or further ink colours in an area of the substrate with 0% silver surrounded by an area having a large pre-determined area of silver (i.e. 100%), so that the informative pattern can be seen to change from a light colour or shade to a darker colour or shade under correct conditions of light. This is due to the inherent dullness of a metallic area when light is not shining thereon, which makes the area containing the first and/or further ink colours (i.e. CMYK area) seem very bright. Thus, when the substrate is moved and light shines upon the metallic area, the metallic area becomes much brighter than the CMYK area, thereby making the CMYK area seem to change colour from a light shade of colour to a dark shade of colour.

In a yet further alternative aspect of the invention, a simulated metallic holographic image may be printed by printing a series of metallic colours on a generally metallic background colour, said metallic colours being those which are typically seen in a holograph. The holographic effect can also include printing techniques taken from the above mentioned security features to add dimensions and/or colours which appear to change colour in light. The series of metallic colours are printed according to the printed process of the present invention.

The term metallic ink is an ink which has a metallic quality when dry.

The term image includes any or any combination of graphical or textual matter, line art characters, pictures, photographs and/or the like.

The term ink includes any fluid like substance, including paints or other colour pigmented fluid.

According to yet further aspects of the present invention there is provided a colour palette produced according to any one or the abovementioned printing processes.

A complete set of colour palettes can be produced using the printing process of the present invention for the majority of mainstream application programmes containing unique reference coded swatches for Quark Xpress®, Adobe Illustrator®, Adobe Indesign®, Adobe Pagemaker®, Adobe Photoshop®, Macromedia Freehand® and Artpro®.

According to yet further aspect of the present invention there is provided a colour swatch book containing a plurality of colour swatches, each colour swatch containing a unique reference code, said colour swatches produced according to any of the above mentioned printing processes.

The present invention allows ICC profiling which allows substantially all the colours created by the invention to be accurately reproduced across a multitude of printing platforms, which cannot be done with conventional Pantone Spot Metallics. Thus, the profiling allows the accurate reproduction of the colour swatch book and/or colour palette consistently across any printing platform since a colour test chart can be prepared and compared using a spectrophotometer (a measurement device that measures colour values). The comparison between the profile created for the swatch book and/or colour palette and the profile printed on other printing presses allows a compensation curve to be created. This is not currently possible with the Pantone Spot Metallic colours since it is not possible to measure a metallic colour as the metallic particles in the ink reflect the light source form the spectrophotometer at different angles giving false readings. This problem is avoided in the present invention since the metallic ink is provided in the base layer and so the spectrophotometer measures the first and/or further ink colours provided on top of the metallic base layer.

An ICC profile can be created for the use on a Kodak First Check and/or Kodak Approval Proofing Systems, so that at the proofing stage, all metallic colour swatches created from the colour palette can be accurately reproduced on a proof, prior to printing. This is not possible with the conventional Pantone Metallic inks, since these are manufactured using other spot ink mixtures which cannot be accurately reproduced on proofing devices.

An advantage of the process according to the present invention is the absence of any human subjective assessment of any of the process ink colour separations/pre-determined dot patterns prior to printing. The only human intervention in the process is the first colour matching process which is a standard reprographic technique, and one which is widely practised.

The present invention further precludes the need for the vast array of PANTONE® reference metallic inks which are available as pre-defined and pre-mixed metallic colours for printing, as it is exceedingly simple to now provide a swatch containing printed sheets wherein the percentages of the process colours and spot colours vary across a range, for example 0-100% and by discrete intervals, perhaps 5%. As such, the present invention allows easy proofing of documents prior to a print run which was not before possible with the prior art.

Each page can be printed with potentially millions of different metallic colours all in a single pass through a conventional 5 or 6 colour printing press, and the resulting pages can be used as colour sample cards in an identical manner to conventional swatches, except in the latter case, the swatches are individually separately printed a number of different times with each of the various different metallic inks portrayed thereon.

The present invention allows any given image to be converted into a multitude of metallic colours and should therefore not be seen to be restricted to an image which originally has metallic qualities/metallic areas. This is in contrast to other conventional printing processes, such as MIPP®, WISE® or WIMS®, which only allow the application of metallic ink to be used in areas where an image originally had silver or gold qualities. In addition, the abovementioned conventional printing processes can only be applied to photographic images and is restricted to Adobe Photoshop as a set of basic Photoshop Actions. The present invention can be applied to photographic images, line art including text, borders, flat colour areas, backgrounds and areas not containing bit-map images and can be used in all standard application programmes known to the applicant, such as Quark Xpress, Adobe Illsutrator, Adobe Indesign, Adobe Pagemaker, Adobe Photoshop, Macromdeia, Freehand, Artpro and/or the like.

Embodiments of the present invention will now be described with reference to the accompanying figure and description below.

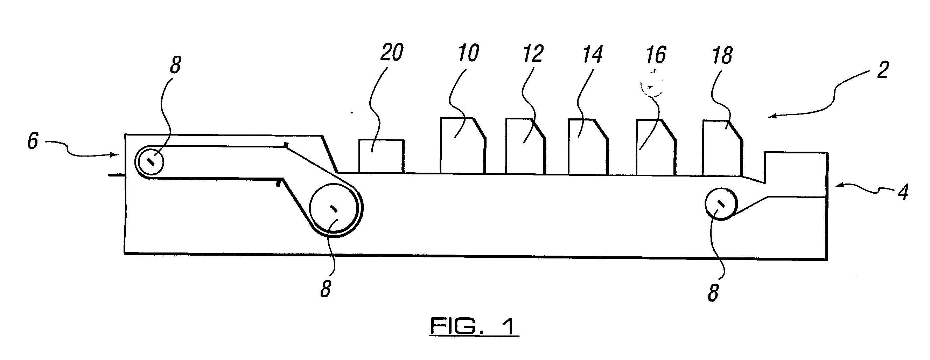

Figure 1 is a simplified view of a printing press used in the present invention.

Referring to figure 1, there is illustrated a five colour printing press 2 for use in the present invention. The printing press 2 includes an input end 4 for locating a substrate, which in this example is paper, on which a number of images are to be printed into the press and an output end 6 for extracting the paper from the press once the images have been printed thereon. A plurality of rollers 8 are provided in the printing press to transport the paper therethrough (only a few rollers 8 have been shown in figure 1 for the purposes of clarity).

A plurality of press units 10, 12, 14, 16 and 18 are provided in the printing press corresponding to four conventional colour separations (CMYK) and a metallic silver colour separation respectively. Each press unit contains a plate roller through which the paper passes and on which a mask of the images to be printed is mounted. In accordance with the present invention, the paper passes through press unit 18 first to allow the silver ink to be applied to the substrate prior to the paper proceeding through press units 16, 14, 12, 10.

Thus, press unit 18 applies silver ink to the paper in a pre-determined pattern, cyan ink is then applied to the paper via press unit 16 in a pre-determined dot pattern, magenta ink is then applied to the paper via press unit 14 in a pre-determined dot pattern, yellow ink is applied to the paper press via press unit 12 in a pre-determined pattern and finally black ink is applied to the paper via press unit 10 in a predetermined pattern. The combination of the different dot patterns on the paper forms the resulting colour images, one or more regions of which will appear metallic.

A further press unit 20 can be provided to apply a sealer layer on top of the printed images on the paper to protect the same.

It will be appreciated by persons skilled in the art that press units 10, 12, 14, 16 can be provided in any order in the press unit, can contain any colour ink as required and can vary in number if required.

The percentage of ink applied to the paper via the press units can be varied from 0-100% to obtain the required end colour of the image or portion of the image. The percentage value represents the percentage of the substrate or image provided with the ink dot pattern. It is preferred that the silver (or any other metallic ink) is varied between 60-100% since below 60%, the silver will gradually loose its metallic appearance. The silver can be provided as a solid base layer or can be provided in a dot pattern arrangement as required.

For example, the following combinations of colour separations could be provided:
Example 1: any colour combination from 0-100% of one or more of Cyan, Magenta, Yellow, Black + a solid Silver and/or gold separation. i.e 14% cyan + 21% magenta + 67% yellow + 6% black + solid silver and/or gold
Example 2: any colour combination from 0-100% of one or more of Cyan, Magenta, Yellow, Black + a variable Silver and/or gold separation. i.e 14% cyan + 21% magenta + 67% yellow + 6% black + variable silver (eg.80%) and/or variable gold (eg. 70%)

The above method can be used to print metallic blended images, tint panels, illustrations and/or the like onto a substrate using any or any combination of silver, gold, magenta, black, cyan, and yellow. The applicants have found that a practically infinite number and range of metallic colours may be printed using only silver as the metallic component, whereas not every metallic colour in a range is capable of being printed using a gold ink as the only metallic element in the printed image.

It is of course possible in the present invention to use only a single spot colour of silver or gold, or to use two spot colours being silver and gold in the print process. Image editing and manipulation software such as Adobe® Photoshop is capable of presenting a metallic image in a number of different separations, whether the standard process colour separations of CMYK or one or more spot colour separations, being silver and/or gold.

It is also to be mentioned that the spot colours of metallic silver and gold may be printed with identical screen angles without significant risk of moiré interference patterns in the resulting printed image as the two colour inks would not overlap with each other.

The printing process of the present invention can be used with any conventional software package and a process of producing an image containing a metallic region will now be described in detail below.

In a first step of the printing process, a digital image is analysed to determine the required metallic effect and in which regions of the image this is to be reproduced. By using a combination of one or more of alpha masks (masks relating to the dot patterns for each required ink colour), channel separations, inverted separations and image selections in an image manipulation program, e.g. Adobe® Photoshop, a fifth or sixth channel/separation is created. Areas that do not require the metallic effect are airbrushed/deleted from the alpha channel, and the layer is then feathered/softened/blurred to avoid sharp edges, giving a more natural look in the resulting printed image.

To achieve the required metallic effect, the tonal areas of the 4 colour separation images may be adjusted to compensate for the addition of a silver and/or gold ink. This is achieved using standard image adjustments i.e. hue, saturation, selective colour correction, tonal levels, colour curves etc. until the required colour is achieved.

Alternatively, the silver or gold may be decreased proportionately in percent value to achieve a cleaner metallic colour in the final printed image. By adjusting the amount of silver and/or gold from 100% to 60% (variable percentages within), the metallic effect is still present but a cleaner metallic colour hue can be achieved.

Once the image manipulation is completed on the computer, the image file is then saved as a DCS2 file (the only file format to support multiple spot colour channels), allowing the file to be imported into a page makeup program. If a metallic digital image is required as a cut-out, a clipping path is made in Adobe Photoshop. In general, because image manipulation programmes only support clipping paths within JPEG or EPS file types, a third party programme may be required to edit the cropping information. By using Quark® Xpress 4.1 or greater as the page makeup application, it is possible to take advantage of the facility within that program for detecting an assigned cropping path from the imported DCS2 file created earlier.

In the case where it is desired to create tint panels, illustrations and text, the following is relevant.

It is to be mentioned that the metallic printing process is not restricted to that of digital imagery. Any colour element can be transformed into a metallic region in the resulting printed image as required or desired. All elements of the image may be coloured to match a required or pre-selected metallic colour (colour percentages are taken from the master grids produced for the entire colour spectrum). For instance, in the instance where a picture of a metallic car is taken, although the car can only possibly be of one metallic colour, the resulting captured image will have lighter and darker regions depending on how the light falls on the car. Accordingly, in the digital printing process it is possible to account automatically for the lighter and darker regions in the image, which in one interpretation are a series of infinitesimally different metallic colours in the printed image.

A duplicate of the information is then produced directly over the top of the existing 4 standard process colour image, and coloured up either silver or gold. This silver and/or gold layer is then set to overprint (so that upon rasterising the file, the silver is overprinted with CMYK - creating the 5/6 colour separations).

All illustrations, digital images and text are then compiled together to create artwork, using a page makeup program i.e. Quark® Xpress.

Once the artwork is created it is translated into a postscript file (PS) and transferred onto a digital RIP. The RIP then translates the PS file into CT and LW as is commonly known in the digital printing industry. Each CT and LW is either a 5 or 6 colour separation. These separations are then either plotted out onto file and a cromalin is made or preferably, the artwork is printed out onto a Kodak First Check Desktop Proofer device, which does not need film and can be proofed in metallics using the following process:
Silver/Gold/Cyan/Magenta/Yellow/Black.

File can also be supplied digitally - so as to output to a CTP plate system, thus precluding the need for film.

The various screen angles mentioned above still apply in this process, as do the provision of the metallic ink being located as the base layer. Various screening techniques can also be used e.g. diamond screening, stochastic screening, mega dot screening etc, and thus the process is not restricted to conventional film/screen angles.

In general, screen angles of - 7.5 degrees shifted from the standard conventional angles for the 4 colour screens are used, and a standard conventional screen angle is used for the silver and/or gold separation. This eliminates screen clash and thus does not restrict the angles.

## Claims

1. A printing process for printing an image having one or more metallic regions, said process including the steps of applying a pre-determined pattern of dots of a first ink colour onto a substrate, optionally followed by applying pre-determined patterns of dots of one or more further ink colours onto the substrate, the combination of dot patterns of said first and/or further ink colours resulting in at least part of the image and wherein a base layer containing a metallic ink is first provided on the substrate in a pre-determined pattern prior to the first and/or further ink colours being applied thereto to form the image, **characterised in that** each of the base layer and the first and/or further ink colours are printed at different screen angles.

2. A printing process according to claim 1 wherein the image is produced following a single pass through a printing press.

3. A printing process according to claim 1 wherein the tack levels of any or any combination of the metallic ink, first and/or further ink colours are adjusted to allow adherence of the first and/or further ink colours onto the metallic ink base layer.

4. A printing process according to claim 3 wherein the tack levels of the metallic ink is substantially equal to the tack levels of the first and/or further ink colours.

5. A printing process according to claim 4 wherein the tack levels of the metallic ink, first and/or further ink colours is approximately five.

6. A printing process according to claim 1 wherein the first and/or further ink colours are substantially transparent.

7. A printing process according to claim 1 wherein the first and/or further ink colours are any or any combination of standard cyan, magenta, yellow and black (CMYK) printing inks.

8. A printing process according to claim 1 wherein the first and/or further ink colours are any or any combination of altered standard cyan, magenta, yellow and black (CMYK) printing inks.

9. A printing process according to claims 7 or 8 wherein a printing press is used including a metallic ink printing unit and four further successive printing units for printing the standard and/or altered CMYK printing inks.

10. A printing process according to claim 9 wherein the printing press further includes a press unit for the application of one or more sealing layers on the substrate.

11. A printing process according to claim 1 wherein the metallic ink is applied to the substrate as one or more solid areas of colour in a pre-determined pattern.

12. A printing process according to claim 1 wherein the metallic ink is applied to the substrate in a pre-determined dot pattern.

13. A printing process according to claim 1 wherein the metallic ink is silver and/or gold metallic ink.

14. A printing process according to claim 1 wherein the percentage coverage of a pre-determined area of the substrate of the metallic ink and the first and/or further inks are varied by pre-determined increments to produce a colour palette.

15. A printing process according to claim 14 wherein each colour of the colour palette has a unique reference associated therewith.

16. A printing process according to claim 14 wherein the percentage coverage of the inks is varied from 0-100%.

17. A printing process according to claim 16 wherein the percentage coverage of the metallic ink is varied from 60-100%.

18. A printing process according to claim 1 wherein any or any combination of the metallic ink, the first ink and/or further ink colours are printed at angles shifted from conventional screen angles of 0°, 15°, 45°, 75°, 90°, 105°.

19. A printing process according to claim 18 wherein the conventional screen angles are rotationally shifted through ±7.5°.

20. A printing process according to claim 1 wherein the metallic ink is printed at a conventional screen angle and the first and/or further ink colours are printed at shifted screen angles.

21. A printing process according to claim 20 wherein the metallic ink is printed at a screen angle which is divisible by 15.

22. A printing process according to claim 20 wherein the metallic ink is printed at a screen angle of 45°.

23. A printing process according to claim 1 wherein the metallic ink is printed at a shifted screen angle and the first and/or further ink colours are printed at conventional screen angles.

24. A colour palette produced using the printing process of claim 1.

25. A colour swatch book produced using a printing process according to any of claims 1 to 23.

26. A security feature produced using a printing process according to any of claims 1 to 23.

27. A simulated holographic feature produced using a printing process according to any of claims 1 to 23.

## Patentansprüche

1. Ein Druckprozess zum Drucken eines Farbbildes, das einen oder mehrere metallische Bereiche aufweist, besagten Prozess inklusive der Stufen, mit denen ein vorbestimmtes Muster von Punkten eines ersten Farbtons auf ein Trägerma-terial aufgetragen wird, wahlweise vom Auftragen vorbestimmter Punktmuster in einem oder weiteren Farbtönen auf das Trägermaterial gefolgt, wobei die Kom-bination von Punktmustern des besagten ersten Farbtons und/oder weiteren Farbtönen wenigstens ein Teil des Farbbildes ergeben und in dem eine Grund-schicht eine metallische Farbe enthält, zuerst auf dem Trägermaterial in einem vorbestimmten Muster verfügbar gemacht, bevor der erste und/oder weitere Farbtöne auf selbiges aufgetragen werden, um ein Farbbild zu formen, **dadurch gekennzeichnet, dass** jede der Grundschichten und der erste Farbton und/oder weiteren Farbtöne mit unterschiedlichen Rasterwinkeln gedruckt wird.

2. Ein Druckprozess nach Anspruch 1, in dem das Farbbild nach einem Durchlauf durch die Druckmaschine hergestellt wird.

3. Ein Druckprozess nach Anspruch 1, in dem die Zügigkeitsstufenjeder oderjeder Kombinationen der metallischer Farbe, des ersten Farbtons und/oder wei-terer Farbtöne eingestellt werden, um Anhaftung des ersten Farbtons und/ oder weiterer Farbtönen auf der metallische Farbengrundlage zu ermöglichen.

4. Ein Druckprozess nach Anspruch 3, in dem die Zügigkeitsstufen der metallischen Farbe im Wesentlichen gleich der Zügigkeitsstufen des ersten Farbtons und/oder weiteren Farbtönen sind.

5. Ein Druckprozess nach Anspruch 4, in dem die Zügigkeitsstufen der metallischen Farbe, des ersten Farbton und/oder weiterer Farbtöne ca. fünf betragen.

6. Ein Druckprozess nach Anspruch 1, in dem der erste Farbton und/oder weitere Farbtöne im Wesentlichen transparent sind.

7. Ein Druckprozess nach Anspruch 1, in dem der erste Farbton und/oder weitere Farbtöne jede oder jede Kombination von Standard Zyanblau, Magenta, Gelb und Schwarz (CMYK) Druckfarben sind.

8. Ein Druckprozess nach Anspruch 1, in dem der erste Farbton und/oder weitere Farbtönen jede oder jede Kombination von geänderten Standard Druck-farben Zyanblau, Magenta, Gelb und Schwarz (CMYK) sind.

9. Ein Druckprozess nach Ansprüchen 7 oder 8, in dem eine Druckmaschine inklusive einer Druckeinheit für metallische Farbe und vier weitere auf einander folgende Druckeinheiten zum Drucken der Standard und/oder geänderten CMYK Druckfarben eingesetzt werden.

10. Ein Druckprozess nach Anspruch 9, in dem eine Druckmaschine weiter eine Druckeinheit zum Auftragen einer oder mehrerer Versiegelungsschichten auf das Trägermaterial aufweist.

11. Ein Druckprozess nach Anspruch 1, in dem die metallische Farbe auf das Trägermaterial als eine oder mehrere Farbbereiche ohne Farbnuancen in einem vorbestimmten Muster aufgetragen wird.

12. Ein Druckprozess nach Anspruch 1, in dem die metallische Farbe auf das Trägermaterial in einem vorbestimmten Punktmuster aufgetragen wird.

13. Ein Druckprozess nach Anspruch 1, in dem die metallische Farbe Silber und/oder Gold metallische Farbe ist.

14. Ein Druckprozess nach Anspruch 1, in dem der prozentuale Anteil der Deckung eines vorbestimmten Bereichs des Trägermaterials der metallischen Farbe und der ersten und/oder weiteren Farben durch vorbestimmte Inkremente verändert wird, um eine Farbenpalette zu erzeugen.

15. Ein Druckprozess nach Anspruch 14, in dem jede Farbe der Farbpalette eine einzigartige Referenz diesbezüglich aufweist.

16. Ein Druckprozess nach Anspruch 14, in dem der prozentuale Anteil der Deckung der Farben von 0 - 100% variiert.

17. Ein Druckprozess nach Anspruch 16, in dem der prozentuale Anteil der Deckung der metallischen Farbe von 60 - 100% variiert.

18. Ein Druckprozess nach Anspruch 1, in dem jede oder jede Kombination der metallischen Farbe, des ersten Farbtons und/oder weiterer Farbtöne in Winkeln gedruckt werden, die von konventionellen Rasterwinkeln von 0°, 15°, 45°, 75°, 90°, 105° turnusmäßig versetzt wurden.

19. Ein Druckprozess nach Anspruch 18, in dem die konventionellen Raster-winkel turnusmäßig um ±7,5 ° versetzt werden.

20. Ein Druckprozess nach Anspruch 1, in dem die metallische Farbe mit einem konventionellen Rasterwinkel gedruckt wird und der erste Farbton und/oder weitere Farbtöne mit versetzten Rasterwinkeln gedruckt werden.

21. Ein Druckprozess nach Anspruch 20, in dem die metallische Farbe mit einem Rasterwinkel gedruckt wird, der durch 15 geteilt werden kann.

22. Ein Druckprozess nach Anspruch 20, in dem die metallische Farbe mit einem Rasterwinkel von 45° gedruckt wird.

23. Ein Druckprozess nach Anspruch 1, in dem die metallische Farbe mit einem versetzten Rasterwinkel gedruckt wird und der erste Farbton und/oder weitere Farbtöne mit konventionellen Rasterwinkeln gedruckt werden.

24. Eine Farbpalette, die erzeugt wird, indem der Druckprozess nach Anspruch 1 verwendet wird.

25. Ein Heft mit Farbproben, das erzeugt wird, indem ein Druckprozess nach jedem der Ansprüche 1 bis 23 verwendet wird.

26. Ein Sicherheitsmerkmal, das erzeugt wird, indem ein Druckprozess nach jedem der Ansprüche 1 bis 23 verwendet wird.

27. Ein simuliertes holographisches Merkmal, das erzeugt wird, indem ein Druckprozess nach jedem der Ansprüche 1 bis 23 verwendet wird.

## Revendications

1. Procédé d'impression pour imprimer une image ayant une ou plusieurs régions métalliques, ledit procédé comprenant les étapes qui consistent à appliquer, sur un substrat, un motif prédéterminé de points d'encre d'une première couleur, étape optionnellement suivie de l'application, sur un substrat, de motifs prédéterminés de points d'encre d'une ou de plusieurs autres couleurs, la combinaison de motifs de points de ladite première couleur d'encre et/ou d'autres couleurs d'encre produisant une partie au moins de l'image, et selon lequel une couche de fond contenant une encre métallique est, dans un premier temps, placée sur le substrat selon un motif prédéterminé, avant l'application sur ce substrat de la première couleur d'encre et/ou d'autres couleurs d'encre pour former l'image, **caractérisé en ce que** la couche de fond et la première couleur d'encre et/ou d'autres couleurs d'encre sont imprimées à des angles de trame différents.

2. Procédé d'impression selon la revendication 1, selon lequel l'image est produite après un seul passage d'impression.

3. Procédé d'impression selon la revendication 1, selon lequel les niveaux de pégosité de l'une quelconque, ou d'une quelconque combinaison de l'encre métallique, de la première couleur d'encre et/ou d'autres couleurs d'encre sont ajustés pour permettre à la première couleur d'encre et/ou aux autres couleurs d'encre d'adhérer à la couche d'encre métallique de fond.

4. Procédé d'impression selon la revendication 3, dans lequel le niveau de pégosité de l'encre métallique est sensiblement égal aux niveaux de pégosité de la première couleur d'encre et/ou des autres couleurs d'encre.

5. Procédé d'impression selon la revendication 4, dans lequel les niveaux de pégosité de l'encre métallique, de la première couleur d'encre et/ou des autres couleurs d'encre égalent cinq environ.

6. Procédé d'impression selon la revendication 1, selon lequel la première couleur d'encre et/ou d'autres couleurs d'encre sont sensiblement transparentes.

7. Procédé d'impression selon la revendication 1, selon lequel la première couleur d'encre et/ou d'autres couleurs d'encre sont l'une quelconque ou une quelconque combinaison d'encres d'impression cyan, magenta, jaune et noir (CMYK).

8. Procédé d'impression selon la revendication 1, selon lequel la première couleur d'encre et/ou d'autres couleurs d'encre sont l'une quelconque ou une quelconque combinaison d'encres d'impression normalisées cyan, magenta, jaune et noir (CMYK) modifiées.

9. Procédé d'impression selon les revendications 7 ou 8, selon lequel une presse à imprimer est utilisée, cette machine comprenant une unité d'impression pour encres métalliques et quatre autres unités d'impression successives pour l'impression avec les encres CMYK standards et/ou modifiées.

10. Procédé d'impression selon la revendication 9, selon lequel la presse à imprimer comprend de plus une unité d'impression pour l'application, sur le substrat, d'une ou plusieurs couches bouche-pores.

11. Procédé d'impression selon la revendication 1, selon lequel l'encre métallique est appliquée sur le substrat sous forme d'une région de couleur solide, ou davantage, selon un motif prédéterminé.

12. Procédé d'impression selon la revendication 1, selon lequel l'encre métallique est appliquée au substrat selon un motif de points prédéterminé.

13. Procédé d'impression selon la revendication 1, selon lequel l'encre métallique est une encre métallique argent et/ou or.

14. Procédé d'impression selon la revendication 1, selon lequel on fait varier les pourcentages de recouvrement d'une région prédéterminée du substrat de l'encre métallique, de la première encre et/ou d'autres encres selon des incréments prédéterminés pour produire une palette de couleurs.

15. Procédé d'impression selon la revendication 14, selon lequel chacune des couleurs de la palette de couleurs est pourvue d'une référence unique qui lui est propre.

16. Procédé d'impression selon la revendication 14, selon lequel le pourcentage de recouvrement des encres varie entre 0 et 100%.

17. Procédé d'impression selon la revendication 16, selon lequel le pourcentage de recouvrement de l'encre métallique varie entre 60 et 100%.

18. Procédé d'impression selon la revendication 1, selon lequel une encre quelconque ou une quelconque combinaison de l'encre métallique, de la première couleur d'encre et/ou d'autre couleurs d'encre sont imprimées à des angles décalés par rapport aux angles de trame conventionnels, soit 0°, 15°, 45°, 75°, 90°, 105°.

19. Procédé d'impression selon la revendication 18, selon lequel les angles de trame conventionnels sont décalés de ±7,5° par rotation.

20. Procédé d'impression selon la revendication 1, selon lequel l'encre métallique est imprimée à un angle de trame conventionnel et la première couleur d'encre et/ou d'autres couleurs d'encre sont imprimées à des angles de trame décalés.

21. Procédé d'impression selon la revendication 20, selon lequel l'encre métallique est imprimée à un angle de trame divisible par 15.

22. Procédé d'impression selon la revendication 20, selon lequel l'encre métallique est imprimée à un angle de trame de 45°.

23. Procédé d'impression selon la revendication 1, selon lequel l'encre métallique est imprimée à un angle de trame décalé, et la première couleur d'encre et/ou d'autres couleurs d'encre sont imprimées à des angles de trame conventionnels.

24. Palette de couleurs produite au moyen du procédé d'impression de la revendication 1.

25. Livret d'échantillons de couleurs produit au moyen d'un procédé d'impression selon l'une quelconque des revendications 1 à 23.

26. Elément de sécurité produit au moyen d'un procédé d'impression selon l'une quelconque des revendications 1 à 23.

27. Elément holographique simulé produit au moyen d'un procédé d'impression selon l'une quelconque des revendications 1 à 23.
